# EUROPÄISCHE PATENTANMELDUNG

(11) **EP 1 447 991 A1**
(43) Veröffentlichungstag der Anmeldung: **18.08.2004**
(21) Anmeldenummer: 03003107.4
(22) Anmeldetag: 12.02.2003
(51) Int. Cl.: H04N 9/28

(54) **Farbbildröhre mit Korrekturelement für statische Konvergenz**

(71) Anmelder: MT Picture Display Germany GmbH, 73730 Esslingen (DE)
(72) Erfinder: Lehner, Heinz, 94363 Oberschneiding (DE); Nelle, Friedrich Karl, Dipl.-Ing,, 70439 Stuttgart (DE); Mitrowitsch, Johann, Dipl.-Ing., 73669 Lichtenwald (DE)
(74) Vertreter: Grünecker, Kinkeldey, Stockmair & Schwanhäusser Anwaltssozietät

(57) **Zusammenfassung**

Die Erfindung betrifft eine Farbbildröhre, bei der in einfacher Weise ein nachträglicher Abgleich der statischen Konvergenz durchgeführt werden kann. Dazu wird außen auf den Hals der Farbbildröhre ein Korrekturelement aufgesteckt, das zwei gegenüberliegend angeordnete Permanentmagneten aufweist. Dieses Korrekturelement ermöglicht auf einfache Weise eine nachträgliche Korrektur der statischen Konvergenz.

## Beschreibung

Die Erfindung betrifft allgemein eine Farbbildröhre und befasst sich insbesondere mit einer Vereinfachung der statischen Korrektur bei der Herstellung einer Farbbildröhre, eines Fernsehgerätes und eines Farbmonitors.

Eine Farbbildröhre weist ein im Hals der Bildröhre angeordnetes Elektronenstrahlerzeugungssystem auf. Außen an der Farbbildröhre sind Ablenkeinheiten montiert, um die Elektronenstrahlen in X- und Y-Richtung über den Bildschirm abzulenken. Eine Ablenkeinheit besteht im Wesentlichen aus zwei Spulenpaaren und einem Ferritkern. Ein Paar horizontaler Ablenkspulen erzeugt ein Magnetfeld, das die Elektronenstrahlen in horizontaler (X)-Richtung ablenkt. Ein Paar von Vertikal-Ablenkspulen erzeugt ein Magnetfeld, das die Elektronenstrahlen in vertikaler (Y)-Richtung ablenkt. Der Ferritkern umschließt beide Spulenpaare und dient zur Rückführung des magnetischen Flusses.

Bei einem Elektronenstrahlerzeugungssystem in In-Line-Anordnung sind die Elektronenstrahlerzeugungssysteme der drei Elektronenstrahlen in einer Ebene nebeneinander angeordnet. Grundsätzlich ist das durch solche Farbbildröhren über geeignete Ablenkeinheiten erzeugte Bild selbstkonvergierend und weist im Wesentlichen keine Verzerrungen auf.

Konvergenzfehler entstehen, wenn die drei Elektronenstrahlen nicht exakt ihre zugeordneten Leuchtpunkte auf der Innenseite des Bildschirms treffen. Ein weißer Bildpunkt erscheint dann nicht weiß, sondern mit einem Farbstich. Konvergenzfehler werden in zwei Arten von Konvergenzfehlem unterteilt, nämlich statische Konvergenzfehler und dynamische Konvergenzfehler. Statische Konvergenzfehler werden durch einen Versatz der Elektronenstrahlkanonen zueinander hervorgerufen. Dynamische Konvergenzfehler beruhen auf der Geometrie der Bildschirmoberfläche in den Ecken.

Während die dynamische Konvergenz in der Regel durch Korrekturströme über die horizontalen und vertikalen Ablenkspulenpaare und mit Hilfe einer besonderen Korrektureinheit erreicht werden kann, erfolgt der statische Konvergenzabgleich über Mehrpolfelder, die von Permanentmagnetringen am Hals der Bildröhre erzeugt werden. Über eine Verdrehung der Magnetringe lässt sich Richtung und Stärke des Feldes für den statischen Konvergenzabgleich einstellen.

Beim Betrieb einer Farbbildröhre können trotz Einstellung der Konvergenzkorrektur Abweichungen in der Konvergenz auftreten. Solche Veränderungen sind einerseits auf die Erwärmung und den Aufbau von elektrischen Ladungen in der Umgebung der Elektronenstrahlkanone und andererseits auf den Parallelverlauf der Elektronenstrahlen zurückzuführen. Diese Konvergenzabweichungen können bis zu 1,0 mm in der Schirmmitte der Farbbildröhre betragen.

Durch Laufzeitunterschiede der drei Farbkanäle im Fernsehgerät können Verschiebungen im Zeitverhalten der Farben zueinander entstehen. Der dadurch verursachte Fehler wird als "quasi"-Konvergenzfehler wahrgenommen.

Obwohl bei der Herstellung heutiger Farbbildröhren ein hoher Aufwand betrieben wird, um trotz der Störeinflüsse einen Konvergenzabgleich zu erreichen, ist bei einem geringen Anteil der hergestellten Fernsehgeräte eine nachträgliche Korrektur der statischen Konvergenz erforderlich. Eine solche Nachjustierung der an der Bildröhre vorhandenen Konvergenzkorrektureinheit ist jedoch innerhalb der kurzen Taktzeiten beim Herstellungsvorgang der Farbbildröhre, des Fernsehgerätes oder des Farbmonitors nicht möglich.

Aufgabe der Erfindung ist es daher, eine Farbbildröhre und ein Herstellungsverfahren anzugeben, mit denen sich die statische Konvergenz ohne Verlängerung der Taktzeiten verbessern lässt.

Diese Aufgabe wird von der Farbbildröhre mit den Merkmalen des Anspruchs 1 und für ein Herstellungsverfahren mit den Merkmalen des Anspruchs 18 gelöst. Außerdem wird die Erfindung mit einem Korrekturelement zur Konvergenzkorrektur bei einer Farbbildröhre mit den Merkmalen des Anspruchs 16 erreicht.

Gemäß einem ersten Aspekt der Erfindung ist eine Farbbildröhre, die im Hals ein Elektronenstrahlerzeugungssystem aufweist, außen mit einem Ablenksystem und einer Konvergenzkorrektureinheit versehen. Zusätzlich ist am Hals der Farbbildröhre ein Korrekturelement montiert. An dem Korrekturelement sind gegenüberliegend zwei Permanentmagneten befestigt, mit denen eine statische Korrektur der Konvergenz bewirkt wird.

In einem solchen Korrekturelement ist eine nachträgliche Korrektur der Konvergenz einer bereits justierten Bildröhre möglich. Auf diese Weise kann eine Verlängerung der Taktzeiten bei der Herstellung vermieden werden, ohne dass eine verschlechterte statische Konvergenz in Kauf genommen werden muss. Insbesondere ist eine erfindungsgemäße Korrektur auch bei einem fertig montieren Farbfernsehgerät und einer fertig montierten Farbbildröhre durchführbar.

Vorzugsweise ist das Korrekturelement auf den Hals der Farbbildröhre aufclipsbar. Auf diese Weise ist eine sehr schnelle Nachkorrektur der statischen Konvergenz möglich.

Mit einer bevorzugten Ausführungsform ist das Korrekturelement aus Kunststoff gerfertigt, so dass das Korrekturelement günstig in der Herstellung, leicht in der Handhabung und robust im Einsatz ist.

Gemäß einer weiter vorteilhaften Ausführungsform sind die Permanentmagnete des Korrekturelementes so angeordnet, dass von ihnen näherungsweise ein Vierpolfeld erzeugt wird. Ein solches Vierpolfeld ermöglicht in einfacher Weise eine gegensinnige Ablenkung der äußeren Elektronenstrahlen. Dazu sind die Permanentmagnete vorzugsweise mit entgegengesetzter N-S-Ausrichtung angeordnet.

Zur Vereinfachung der Montage des Korrekturelementes am Halse der Farbbildröhre ist dieses mit einem Griff versehen.

Vorzugsweise ist das Korrekturelement auf der Befestigungsschelle des Ablenksystems montiert. An dieser Stelle kann einerseits mit geringen Feldstärken eine Korrektur der Konvergenz erreicht werden, andererseits ist an dieser Stelle ein einfaches Aufsetzen des Korrekturelementes auf den Hals der Bildröhre möglich.

Vorteilhafterweise ist das Korrekturelement ringförmig ausgebildet, wobei es den Hals der Farbbildröhre vorzugsweise nur teilweise umfasst. Dadurch ist ein einfaches Aufsetzen des Korrekturelementes auch bei einem fertig montierten Fernsehgerät möglich. Der Winkel, mit dem das Korrekturelement den Hals der Farbbildröhre umfasst, liegt vorzugsweise zwischen 190° und 300°, insbesondere bei ungefähr 270°.

In einer bevorzugten Ausführungsform ist das Korrekturelement seitlich jeweils mit Halterungen versehen, die der Aufnahme der Permanentmagneten dienen. Dadurch ist eine einfache Fertigung von Korrekturelementen möglich, in die Permanentmagnete unterschiedlicher Feldstärke einsetzbar sind.

Gemäß einer weiter bevorzugten Ausführungsform ist das Korrekturelement mit Stegen an der Innenseite, die dem Hals der Farbbildröhre zugewandt ist, versehen. Diese Stege, die jeweils an den Rändern des Korrekturelementes vorgesehen sind, ermöglichen eine Fixierung des Korrekturelementes in Z-Richtung der Farbbildröhre.

Zur Positionierung des Korrekturelementes um die Z-Achse der Farbbildröhre ist das Korrekturelement in der Mitte der Innenseite mit einer Nut versehen. Mit einer solchen Positionierungshilfe ist eine schnelle und dennoch exakte Montage des Korrekturelements möglich.

In einer weiter bevorzugten Ausführungsform der Erfindung wird das Korrekturelement durch einen Klemmsitz auf dem Hals der Farbbildröhre gehalten.

Gemäß einem weiteren Aspekt betrifft die Erfindung ein Farbfernsehgerät oder einen Farbmonitor, die eine erfindungsgemäße Farbbildröhre aufweisen.

In einem weiteren Aspekt der Erfindung ist ein Korrekturelement für einen statischen Konvergenzabgleich bei einer Farbbildröhre angegeben. Das Korrekturelement weist zwei gegenüberliegend angeordnete Permanentmagneten zur nachträglichen Beeinflussung der statischen Konvergenz auf.

Vorzugsweise wird ein Korrekturelement für die nachträgliche Korrektur der statischen Konvergenz aus einem Satz von Korrekturelementen ausgewählt, der gleichartige Korrekturelemente umfasst, die jeweils mit Permanentmagneten unterschiedlicher Feldstärke ausgestattet sind. Auf diese Weise können mit jedem Korrekturelement des Satzes der statische Konvergenzabgleich um einen festgelegten Betrag korrigiert werden. Ohne eine zeitaufwendige und mühsame manuelle Einstellung kann auf diese Weise durch Aufsetzen eines aus einer Mehrzahl von Korrekturelementen die statische Konvergenz nachjustiert werden.

Gemäß einem weiteren Aspekt der vorliegenden Erfindung ist ein Herstellungsverfahren für ein Farbfernsehgerät oder ein Farbmonitor angegeben. Das Herstellungsverfahren enthält den Schritt, die statische Konvergenz einer Farbbildröhre durch Aufstecken eines Korrekturelementes zu korrigieren. Das Korrekturelement enthält zwei gegenüberliegend angeordnete Permanentmagnete. Durch das Aufstecken des Korrekturelementes kann so in einfacher Weise die statische Konvergenz beim Gerätehersteller nachjustiert werden, ohne die Korrektureinheit der Farbbildröhre manuell nachzustellen.

Vorteilhafterweise wird ein Korrekturelement aus einer Mehrzahl von Korrekturelementen mit Permanentmagneten unterschiedlicher Feldstärke ausgewählt. Auf diese Weise ist der statische Konvergenzabgleich durch Auswahl eines passenden Korrekturelementes in einfacher Weise möglich.

Weitere Ausgestaltungen der Erfindung sind Gegenstand der Unteransprüche.

Die Erfindung wird nachfolgend unter Bezugnahme auf die Zeichnung näher erläutert. Es zeigen:
- Fig. 1: eine schematische Vorder- und Rückansicht einer Farbbildröhre mit und ohne Verwendung eines erfindungsgemäßen Korrekturelementes
- Fig. 2: eine schematische Darstellung der Wirkung des erfindungsgemäßen Korrekturelementes, das auf dem Hals einer Farbbildröhre montiert ist,
- Fig. 3: eine schematische Darstellung eines magnetischen Vierpols für den statischen Konvergenzabgleich,
- Fig. 4: eine perspektivische Rückansicht einer Farbbildröhre, in der schematisch das Aufsetzen eines Korrekturelementes dargestellt ist,
- Fig. 5a: eine seitliche Ansicht des erfindungsgemäßen Korrekturelementes,
- Fig. 5b: eine Aufsicht auf das erfindungsgemäße Korrekturelement,
- Fig. 5c: eine seitliche Schnittansicht des erfindungsgemäßen Korrekturelementes,
- Fig. 5d: eine perspektivische Ansicht des erfindungsgemäßen Korrekturelementes und
- Fig. 6: eine schematische Darstellung der Integration der erfindungsgemäßen Nachjustierung der statischen Konvergenz einer Farbbildröhre in den Herstellungsprozess eines Fernsehgerätes.

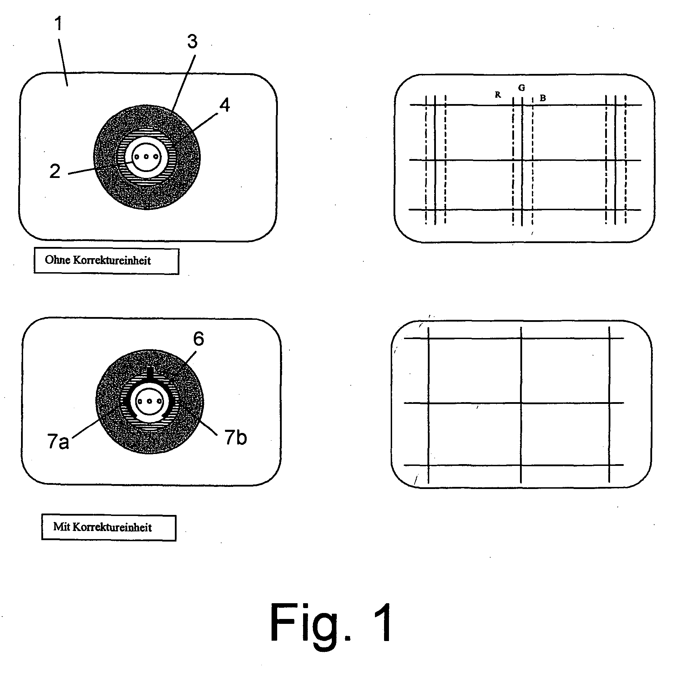

Fig. 1 ist eine schematische Ansicht einer Farbbildröhre ohne Korrekturelement (obere Reihe) und mit einem erfindungsgemäßen Korrekturelement für die statische Konvergenzkorrektur (untere Reihe). Bei einer herkömmlichen Farbbildröhre, wie sie in der oberen Reihe dargestellt ist, ist auf der Rückseite der Farbbildröhre 1 um den Hals 2 eine Ablenkeinheit 3 und eine Korrektureinheit 4 montiert. Trotz einer genauen Einstellung der statischen Konvergenzkorrektur können sich bei dem fertigen Fernsehgerät oder einem fertigen Farbmonitor Konvergenzveränderungen in der Schirmmitte der Bildröhre ergeben. Diese sind im Wesentlichen durch die Erwärmung und den Aufbau der elektrischen Ladungen sowie durch die parallel verlaufenden Elektronenstrahlen bedingt. Außerdem entstehen durch Laufzeitunterschiede der Farbkanäle im Fernsehgerät weitere Verschiebungen der drei Farben zueinander. Diese werden ebenfalls als Konvergenzfehler wahrgenommen. Dieser Konvergenzfehler ist schematisch in Fig. 1, rechts oben, dargestellt.

Um diesen statischen Konvergenzfehler ohne aufwendige Nachjustierung der vorhandenen Konvergenzvorrichtung beheben zu können, ist erfindungsgemäß ein zusätzliches Korrekturelement 6 vorgesehen. Dieses wird am Hals der Farbbildröhre durch einfaches Aufstecken montiert. Durch zwei seitlich an dem Korrekturelement befestigte Permanentmagneten 7a, 7b werden die beiden äußeren Elektronenstrahlen (Blau und Rot) jeweils gegensinnig zueinander korrigiert, so dass das resultierende Bild auf dem Schirm konvergenzfehlerfrei ist (vgl. Fig. 1, rechts unten).

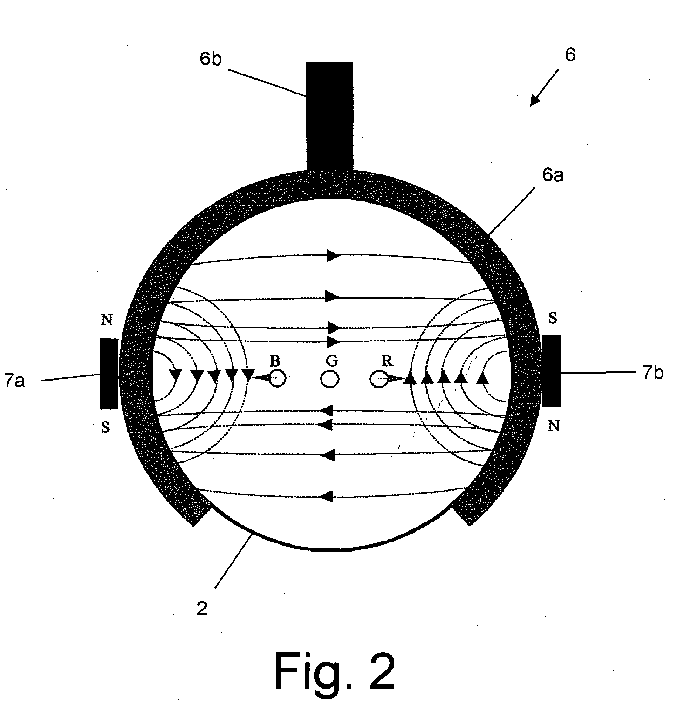

Die Wirkungsweise des erfindungsgemäßen Korrekturelementes 6 ist in Fig. 2 schematisch dargestellt. Fig. 2 zeigt einen Schnitt durch den Hals 2 einer Farbbildröhre, auf die das erfindungsgemäße Korrekturelement 6 aufgesetzt ist. Das Korrekturelement ist im Wesentlichen ringförmig ausgebildet und umschließt ganz oder bevorzugt teilweise den Hals 2 der Farbbildröhre 1. Vorzugsweise ist das Korrekturelement 6 aus Kunststoff gefertigt, so dass der ringförmige Abschnitt 6a elastisch ausgebildet ist und somit leicht über die offen ausgebildete Seite auf den Hals 2 aufsteckbar ist. Ein Aufsetzen des Korrekturelementes ist somit auch dann in einfache Weise möglich, wenn die Anschlüsse am Ende des Halses der Bildröhre mit der Steuerschaltung eines Fernsehgerätes oder Monitors verbunden sind.

Zur Erleichterung des Aufsteckens des Korrekturelementes 6 ist in etwa in der Mitte des ringförmigen Abschnitts 6a ein Griff 6b vorgesehen. Außerdem sind jeweils seitlich an gegenüberliegenden Positionen des ringförmigen Abschnitts 6a Permanentmagnete 7a, 7b vorgesehen. Durch entgegengesetzte N-S-Ausrichtung beider Permanentmagnete entsteht ein angenähertes Vierpolfeld, das die beiden äußeren Elektronenstrahlen, Rot und Blau, in gegensinniger Richtung ablenkt. Im in Fig. 2 dargestellten Beispiel werden die beiden äußeren Elektronenstrahlen weiter nach außen verschoben. Durch eine zum wiedergegebenen Beispiel entgegengesetzte N-S-Ausrichtung beider Magnete 7a, 7b findet eine umgekehrte Ablenkung der äußeren Elektronenstrahlen statt.

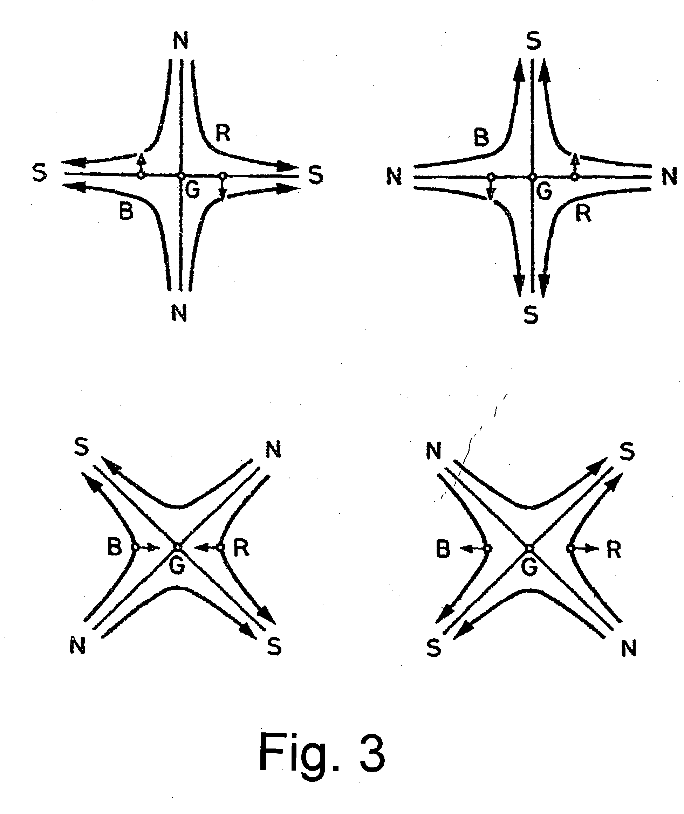

Beispiele für die mit einem Vierpol erzielbaren Korrekturen sind in Fig. 3 dargestellt. Die äußeren Elektronenstrahlen können sowohl in entgegengesetzter Richtung vertikal als auch horizontal abgelenkt werden. Durch Vertauschung der Pole wird die Ablenkrichtung jeweils umgekehrt. Vorzugsweise wird ein solcher Vierpol durch Verwendung von zwei Permanentmagneten 7a, 7b angenähert, wobei die beiden Pole eines Magneten 7a,7b tangential zur Ringform des Korrekturelementes 6 angeordnet sind.

Um in einfacher Weise die statische Konvergenzabweichung jeweils möglichst genau korrigieren zu können, ist die Feldstärke der beiden Magnete 7a, 7b variierbar. Dazu wird vorzugsweise ein Satz von Korrekturelementen 6 verwendet, die jeweils Magneten 7a, 7b mit unterschiedlicher Feldstärke aufweisen, so dass die statische Konvergenz jeweils um einen festen Betrag korrigierbar ist. Mit einer vorbestimmten Anzahl von Korrekturelementen mit jeweils unterschiedlicher Magnetfeldstärke lässt sich in einfacher Weise eine statische Konvergenzkorrektur bei einem fertigen Gerät durchführen.

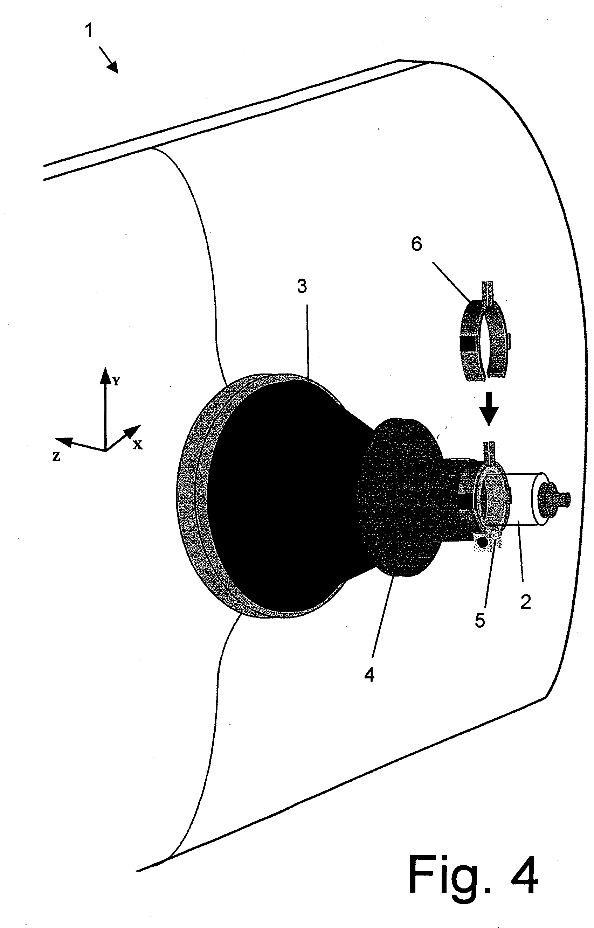

In Fig. 4 ist schematisch die Montage eines solchen Korrekturelementes 6 am Hals einer Farbbildröhre dargestellt. Fig. 4 zeigt eine perspektivische Rückansicht einer Farbbildröhre 1 mit einem Hals 2, in dem das Elektronenstrahlerzeugungssystem angeordnet ist. Am Hals der Elektronenstrahlröhre ist ein Ablenksystem 3 und eine Korrektureinheit 4 montiert. Die Ablenkeinheit ist unter anderem mit einer Schelle 5 am Hals der Farbbildröhre befestigt. Vorzugsweise wird das Korrekturelement 6 auf diese Befestigungsschelle 5 aufgesteckt, wie es durch den Pfeil in Fig. 4 angedeutet ist. Das Korrekturelement kann jedoch alternativ auch direkt auf den Hals 2 der Farbbildröhre 1 aufgesteckt werden.

Der ringförmige Abschnitt 6a des Korrekturelementes 6 ist elastisch ausgebildet, so dass das Kreissegment, das einen Winkel von mehr als 190° umschließt, klemmend auf dem Hals 2 bzw. der Befestigungsschelle 5 sitzt. Vorzugsweise ist das Korrekturelement 6 dazu aus Kunststoff hergestellt. Alternativ kann das Korrekturelement 6 auch aus anderen Materialien gefertigt werden.

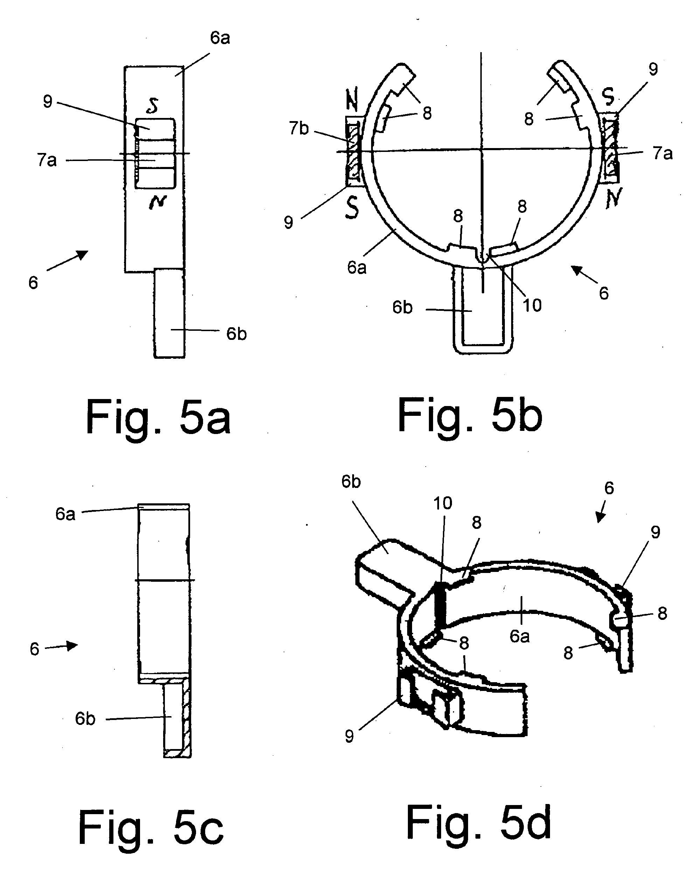

Der Aufbau des Korrekturelementes 6 ist im Einzelnen in den Figuren 5a bis 5d dargestellt. Fig. 5a zeigt eine seitliche Ansicht des Korrekturelementes 6. In der Mitte des ringförmigen Abschnittes 6a ist eine Halterung 9 zur Aufnahme der Permanentmagneten 7a, 7b vorgesehen. Eine Aufsicht auf das Korrekturelement 6 ist in Fig. 5b wiedergegeben. Die in dieser Abbildung dargestellte Ausführungsform des ringförmigen Elementes 6a umschließt den Hals einer Bildröhre in etwa mit einem Winkel von 270°. An den Endbereichen und in der Mitte des ringförmigen Abschnittes 6a sind auf der Innenseite Stege 8 vorgesehen. Diese Stege 8 sind jeweils paarweise und in Umfangsrichtung leicht versetzt angeordnet. Durch diese Stege ist das Korrekturelement 6 in Z-Richtung der Farbbildröhre auf der Schelle 5 fixierbar.

Um den Winkel, mit dem das Korrekturelement 6 auf den Hals der Bildröhre aufgesetzt wird, in einfacher Weise festzulegen, ist in der Mitte der Innenseite des ringförmigen Abschnittes 6a eine Nut 10 vorgesehen. Diese Nut ermöglicht ein Zentrieren des Korrekturelementes über eine entsprechende Nase auf dem Hals 2 der Bildröhre 1 oder der Befestigungsschelle 5.

An der Außenseite des ringförmigen Abschnitts 6a sind die Halterungen 9 für die Permanentmagnete 7a, 7b vorgesehen. Diese Halterungen sind so angeordnet, dass sie beim aufgesetzten Korrekturelement 6 auf die Farbbildröhre 1 in etwa in derselben Ebene wie die Elektronenstrahlen R, B, G des In-Line-Elektronenstrahlerzeugungssystem im Hals 2 der Bildröhre liegen (vgl. Fig. 2). Bei den Permanentmagneten 7a,7b handelt es sich vorzugsweise um entsprechende Magnetbandzuschnitte.

In der Mitte des kreisförmigen Segments 6a ist außen ein Griff 6b vorgesehen. Die Ausgestaltung des Griffs ist in der Schnittansicht durch das Korrekturelement in Fig. 5c im Detail dargestellt. Fig. 5d zeigt eine perspektivische Ansicht des Korrekturelementes 6.

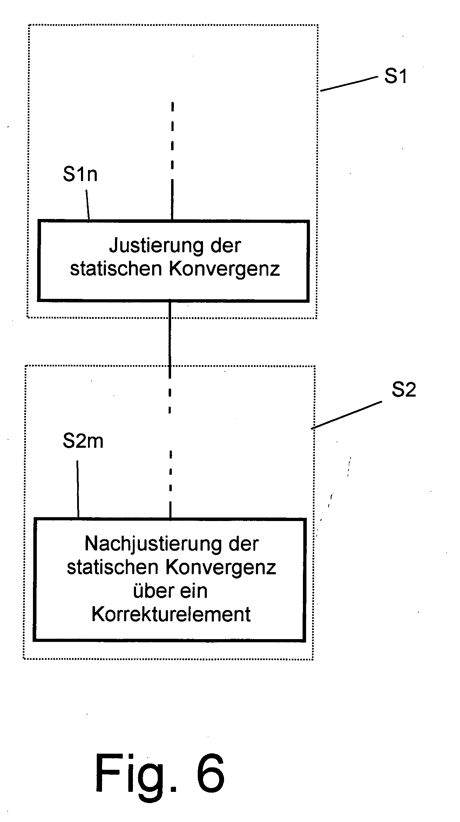

Mit diesem Korrekturelement ist es möglich, die Bildqualität einer Farbbildröhre und der mit dieser Farbbildröhre hergestellten Fernsehgeräte oder Farbmonitore deutlich zu verbessern, ohne dass der Herstellungsprozess (vgl. Fig. 6, S2) deutlich verlangsamt und dadurch verteuert wird. Herkömmlicherweise wird über eine Bildröhre ein statischer Konvergenzabgleich (S1n) über die Konvergenzkorrektureinheit während der Herstellung (S1) einer Farbbildröhre durchgeführt. Dabei wird mit Hilfe von drehbar an der Bildröhre befestigten Vier- und Sechspolen die Orientierung und Intensität der Korrektur eingestellt.

Wenn sich bei der Überprüfung der Wiedergabequalität einer Bildröhre herausstellt, dass die statische Konvergenz nachzujustieren ist, kann dies über die an der Bildröhre vorhandene Korrektureinheit durchgeführt werden. Dieser Vorgang ist jedoch mühsam und zeitraubend, so dass sich eine solche Nachjustierung wirtschaftlich nicht in die Taktzeiten des Herstellungsprozesses integrieren lässt. Die vorliegende Erfindung ermöglicht dagegen ein Nachjustieren der statischen Konvergenz in einfacher Weise zu bewerkstelligen, so dass diese Nachjustierung (S2m) in den üblichen Herstellungsprozess (S2) integrierbar ist. Dazu wird, wenn erforderlich ein Korrekturelement 6 auf den Hals der Bildröhre 1 aufgesteckt.

Um eine jeweils an die tatsächliche Abweichung angepasste Nachjustierung zu ermöglichen, ist ein Satz von Korrekturelementen 6 vorgesehen, die jeweils Permanentmagnete unterschiedlicher magnetischer Feldstärke aufweisen. Somit ist die statische Konvergenz durch Aufsetzen eines der Korrekturelemente für jeweils einen vorher festgesetzten Betrag einstellbar.

Auf diese Weise lässt sich die statische Konvergenz sowohl in einfacher Weise am Ende der Herstellung einer Farbbildröhre. als auch bei der Fertigung eines Fernsehgerätes oder Farbmonitors korrigieren. Dazu wird bei der Überprüfung der Konvergenz der hergestellten Bildröhre, des hergestellten Fernsehgerätes oder des hergestellten Farbmonitors ein Korrekturelement auf den Hals der Bildröhre aufgesteckt, falls erforderlich. Damit ist auch beim Gerätehersteller eine statische Konvergenzkorrektur ohne großen Aufwand möglich, denn ein aufwändiges Nachjustieren der Korrektureinheit entfällt.

## Patentansprüche

1. , Farbbildröhre mit einem im Hals (2) der Farbbildröhre angeordneten Elektronenstrahlerzeugungssystem zur Erzeugung von Elektronenstrahlen, einem außen an der Farbbildröhre angeordneten Ablenksystem (3) und einer ebenfalls außen an der Farbbildröhre angeordneten Konvergenzkorrektureinheit (4)
**gekennzeichnet durch**
ein außen am Hals (2) der Farbbildröhre befestigtes Korrekturelement (6) mit zwei gegenüberliegend angeordneten Permanentmagneten (7a,7b) zur statischen Konvergenzkorrektur.

2. Farbbildröhre nach Anspruch 1, **dadurch gekennzeichnet, dass** das Korrekturelement (6) auf den Hals (2) der Farbbildröhre aufclipsbar ist.

3. Farbbildröhre nach Anspruch 1 oder 2, **dadurch gekennzeichnet, dass** das Korrekturelement (6) aus Kunststoff hergestellt ist.

4. Farbbildröhre nach einem der Ansprüche 1 bis 3, **dadurch gekennzeichnet, dass** die Permanentmagnete (7a,7b) so angeordnet sind, dass sie ein Vierpolfeld zur gegensinnigen Ablenkung der äußeren Elektronenstrahlen erzeugen.

5. Farbbildröhre nach Anspruch 4, **dadurch gekennzeichnet, dass** die N-S-Ausrichtung der Permanentmagnete (7a,7b) entgegengesetzt ist.

6. Farbbildröhre nach einem der Ansprüche 1 bis 5, **dadurch gekennzeichnet, dass** an dem Korrekturelement (6a) ein Griff (6b) zur Montage des Korrekturelementes (6a) an der Farbbildröhre vorgesehen ist.

7. Farbbildröhre nach einem der Ansprüche 1 bis 6, **dadurch gekennzeichnet, dass** das Korrekturelement (6) auf der Befestigungsschelle (5) des Ablenksystems (3) montiert ist.

8. Farbbildröhre nach einem der Ansprüche 1 bis 7, **dadurch gekennzeichnet, dass** das Korrekturelement (6) ringförmig zur teilweisen Umfassung des Halses (2) der Farbbildröhre ausgebildet ist.

9. Farbbildröhre nach Anspruch 8, **dadurch gekennzeichnet, dass** das Korrekturelement (6) den Hals (2) der Farbbildröhre mit einem Winkel zwischen 190° und 300° umfasst.

10. Farbbildröhre nach Anspruch 9, **dadurch gekennzeichnet, dass** das Korrekturelement (6) den Hals (2) der Farbbildröhre mit einem Winkel von in etwa 270° umfasst.

11. Farbbildröhre nach einem der Ansprüche 1 bis 10, **dadurch gekennzeichnet, dass** das Korrekturelement (6) auf der Außenseite mit einer Halterung (9) für jeden der Permanentmagneten (7a,7b) versehen ist.

12. Farbbildröhre nach einem der Ansprüche 1 bis 11, **dadurch gekennzeichnet, dass** das Korrekturelement (6) auf der dem Hals (2) der Farbbildröhre zugewandten Seite Stege (8) aufweist.

13. Farbbildröhre nach einem der Ansprüche 1 bis 12, **dadurch gekennzeichnet, dass** das Korrekturelement (6) in der Mitte der dem Hals (2) der Farbbildröhre zugewandten Seite eine Nut (10) zur Zentrierung des Korrekturelementes (6) aufweist.

14. Farbbildröhre nach einem der Ansprüche 1 bis 13, **dadurch gekennzeichnet, dass** das Korrekturelement (6) auf dem Hals (2) der Farbbildröhre geklemmt befestigt ist.

15. Farbfernsehgerät oder Farbmonitor mit einer Farbbildröhre nach einem der Ansprüche 1 bis 14.

16. Korrekturelement zur nachträglichen Konvergenzkorrektur bei einer Farbbildröhre (1) mit jeweils zwei gegenüberliegend angeordneten Permanentmagneten (7a,7b), so dass die Konvergenz der Farbbildröhre (1) um einen festgelegten Betrag nachträglich korrigierbar ist.

17. Ein Satz von Korrekturelementen (6) gemäß Anspruch 16, wobei der Satz eine Mehrzahl von Korrekturelementen (6) umfasst, die sich jeweils in der Feldstärke der Permanentmagnete (7a,7b) unterscheiden, so dass die Konvergenz der Farbbildröhre (1) jeweils um unterschiedliche, festgelegte Beträge korrigierbar ist.

18. Herstellungsverfahren für ein Fernsehgerät oder einen Farbmonitor mit einer Farbbildröhre (1) **gekennzeichnet durch** den Schritt der nachträglichen Korrektur der statischen Konvergenz der Farbbildröhre (1) **durch** Aufstecken eines Korrekturelementes (6), das zwei gegenüberliegend angeordnete Permanentmagnete (7a,7b) aufweist.

19. Herstellungsverfahren nach Anspruch 17, **dadurch gekennzeichnet, dass** das Korrekturelement (6) in Abhängigkeit vom Betrag der zu korrigierenden statischen Konvergenz aus einer Mehrzahl von Korrekturelementen (6) mit Permanentmagneten (7a,7b) jeweils unterschiedlicher Feldstärke ausgewählt wird.
